# EUROPEAN PATENT SPECIFICATION

(11) **EP 3 853 046 B1**
(45) Date of publication and mention of the grant of the patent: **13.03.2024**
(21) Application number: 19766224.0
(22) Date of filing: 09.09.2019
(51) Int. Cl.: B60C 19/00

(54) **AN IMPROVED TYRE INFORMATION SYSTEM**
VERBESSERTES REIFENINFORMATIONSSYSTEM
SYSTÈME AMÉLIORÉ D'INFORMATIONS DE PNEU

(30) Priority: 20.09.2018 GB 201815291
(43) Date of publication of application: 28.07.2021
(73) Proprietor: Continental Automotive Technologies GmbH, 30165 Hannover (DE)
(72) Inventor: FERNANDES, Brian Sunil Nicholas, Singapore 339780 (SG)
(74) Representative: Continental Corporation
(86) International application number: PCT/EP2019/073948
(87) International publication number: WO 2020/058020

(56) References cited:
- EP-A1- 3 722 162
- DE-A1- 10 214 472
- DE-A1- 10 259 433
- FR-A1- 2 946 772
- US-A1- 2003 156 009

## Description

### TECHNICAL FIELD

This invention relates to a system for granting permission to start or activate an engine system of a vehicle based upon tyre information.

### BACKGROUND ART

Tyres are used in all types of wheeled vehicles, for example cars, trucks, two-wheelers, airplanes, bicycles, etc. The use of tyres with specification that is compatible with vehicle specification is essential to ensure safety of a user operating the vehicle, as well as to support or enhance the performance of the vehicle.

Typically, vehicle tyres are made of solid rubber, are capable of absorbing shock, and are resistant to cuts and abrasion from driving. Tyres having an appropriate load index are able to support suspension systems of vehicles and enhance performance of vehicles, providing comfortable and quality drive.

In contrast, incompatible tyres may compromise the safety of the user operating the vehicle. For example, the state of solid rubber can change due to external factors such as weather changes, for example change of temperature during seasons. Using improper types of tyres for a certain weather condition may decrease the vehicle performance and even result in safety issues. Additionally, using worn-out tyres with insufficient depth in the tyre treads may lead to skidding, especially during wet weather. Another example of use incompatible tyres may be counterfeit tyres, where the specification are different from tyres recommended for use according to type of vehicles.

Conventional methods of reading tyre information known in the art include using Radio Frequency Identification (RFID) tags or devices with RFID readers for extracting information related to a state of tyres, to determine whether the vehicle requires a change of tyres, for example, by determining a depth of the tread design on tyres. Such systems only provide information or reminders to drivers that a change of tyres is necessary.

However, merely knowing whether the tyres are in good condition for driving does not provide a solution to safety of drivers, or mitigate misuse of tyres by drivers. For example, a driver may knowingly decide to continue using an incompatible tyre out of convenience. Misuse of tyres puts the driver as well as other road users at risk.

Conventional known method in this field includes:
DE 102 59 433 A1 which relates to a method providing tires with transponders for storing and transmitting tire-related data to an external transmission and reception unit. The data are transmitted to several transmission and reception units mounted near the wheels after mounting the tires on the wheels and the data are then transmitted from the transmission and reception units to a central unit on the vehicle for detecting and processing the data.

DE 102 14 472 A1 relates to use of transponders fitted in or under the tire tread of every tire on a motor vehicle to make non-contact monolog or dialog communication with a CPU on the vehicle. Data on tire conditions supplied by the manufacturer for transponder memory segments is read out and used for matching tires to vehicles with optimum service and safety.

FR 2 946 772 A1 relates to a method involves integrating identification data relating to tires (P) and rims (J) of wheels (AVG, AVD, ARG, ARD) into an equipment to be controlled. The identification data is read by a detection unit that is embarked on a motor vehicle. The identification data is transmitted to a data processing system of the motor vehicle. The identification data is compared with predetermined data by the data processing system. Actions or alarms are triggered according to a comparison result, where the predetermined data is data approved by a manufacturer and updated.

US 2003/156009 A1 relates to a method for verifying the compatibility of the components of a wheel, having the following steps of identifying each of the components of the assembly by means of an electronic label, after mounting the assembly, verifying at least two of these labels by checking the mutual compatibility of the components corresponding to the identification elements received by a management unit, detecting any situation in which at least one of the components is incompatible with one or more of the other components, and generating a suitable signal in the event of incompatibility.

None of the conventional methods addresses the use of wireless communication to update status of vehicle tires.

There is therefore a lack of solutions that mitigate the risk of misusing incompatible tyres. There is therefore a need to provide a solution to enhance the safety of the user, increase vehicle performance and durability of tyres and other problems as discussed above.

### SUMMARY

In accordance with the invention, a system for verifying compatibility of a tyre with a vehicle is provided. The system comprises the features of claim 1.

Where a tyre information has a range, the parameter refers to this defined range. Where a tyre information is a discrete value, e.g. date of manufacture, the parameter refers to this discrete value. The set of parameters may therefore include ranges, discrete values, or a combination thereof. If the parameter(s) is out of the range or value, conditions set by the system for checking compatibility of tyres may not be met, as described below. Consequently, if compatibility is not met, the engine system cannot start.

The set of parameters may be satisfied when each piece of actual tyre information falls within an acceptable range of a corresponding piece of reference tyre information. Advantageously, the introducing of an acceptable range of parameters allows a driver to continue using the tyres and operating the vehicle despite not meeting the compatibility standards as required by the system. For example, tyres not obtained from original equipment manufacturers may not meet the compatibility standards for every reference tyre information. Some pieces of actual tyre information may meet the reference standard exactly, while other pieces of actual tyre information may deviate from the reference standard but are still within the acceptable range. Falling within a range for certain tyre specifications, such as aspect ratio or load index, may be acceptable as long as the safety of the driver is not compromised, even though the performance of the vehicle may be reduced.

Preferably, the set of reference tyre information comprises of a specification of a tyre compatible with the vehicle. The specification of the tyre comprises of an information relating to types of tyre selected from a group consisting of a summer tyre, a winter tyre, an all-season tyre, a run-flat tyre and a combination thereof. Specifically, the comparison of tyre information based upon the types of tyre is to verify that the appropriate type of tyre is used at the right time, e.g. for the right weather condition.

Preferably, the specification of the tyre comprises of an information relating to a structure of a tyre selected from a group consisting of a composite of material of the tyre, a tread design of the tyre, a tread depth of the tyre, a size of the tyre and a combination thereof. The comparison of tyre information based upon the structure of tyre is to verify whether any degradation of the tyre has occurred such that the safety of the driver, and/or performance of the vehicle is compromised.

Preferably, the specification of the tyre comprises of an information relating to a tyre code selected from a group consisting of a load index, an aspect ratio, wheel height, a wheel width and a combination thereof. The tyre code provides details on tyre characteristics that are marked on the tyres or can be seen on the tyres. Advantageously, the comparison of tyre information based upon the tyre code is to verify whether tyre information such as aspect ratio, load index, wheel height and wheel width of the tyre is compatible with what is recommended for the specific vehicle.

The set of reference information of tyre comprises a location of the tyre relative to the vehicle, the acceptable range being dependent on said location. Tyres at different location of the vehicle may have different specifications. For example, the front tyres of front wheel drive vehicles may experience higher forces than the rear tyres. Thus, the compatibility standards for the front tyres may need to be more stringent and/or the acceptable range may need to be tighter.

If the set of parameters is not satisfied, the vehicle may be prevented from operating. Alternatively, if the set of parameters is not satisfied, the vehicle may still be operated, provided the operator and/or other parties are alerted to the anomaly. In other words, the set of parameters may be satisfied when an alert notification is issued, for example, by the electronic control unit if at least some of actual tyre information falls outside of an acceptable range of the corresponding reference information. Advantageously, the operator or driver is still able to start the engine but is alerted to any tyre issues that may be dealt with at a later time. The type of tyre information permitted to fall outside of the acceptable range may be those that do not compromise the safety of the driver or reduce the vehicle performance drastically.

The alert notification issued by the electronic control unit may be a visual message, an audio message, an alert notification sent to a third party, or a combination thereof.

The third party may comprise an insurance provider, a vehicle manufacturer, a tyre manufacturer, a vehicle repair workshop, a fleet operation service provider and a combination thereof. This feature allows third parties to be notified of the driver's need to replace tyres.

The electronic control unit may be a body control module or other onboard device of a motor vehicle.

### BRIEF DESCRIPTION OF DRAWINGS

Other objects and aspects will become apparent from the following description of embodiments with reference to the accompanying drawings in which:
Fig. 1 illustrates an exemplary system 100 implemented on a vehicle in accordance to a preferred embodiment of this invention.
Fig. 2 shows a flowchart 200 explaining the steps involved for comparison of the set of actual tyre information against the set of reference tyre information.
Fig. 3 which shows a tyre compatibility matrix 300 in accordance to a preferred embodiment of this invention.
Fig. 4 shows a flowchart indicating a method for verifying compatibility of a tyre with a vehicle.

### DETAILED DESCRIPTION

Hereinafter, an explanation of a system and method for verifying compatibility of a tyre with a vehicle will be discussed in detail.

For purposes of this document, the term "wireless signal" or "wireless signals" shall be construed to refer to an electromagnetic wave, such as radio or microwaves, that has the function of transmitting data packets carrying information between different points of a system or network. A wireless signal may be classified as long-range or short-range. Examples of short-range wireless communication signals includes radio frequency (RF) signals, ultra-wide band (UWB) signals, infrared signals or typically signals that conforms with the standards of near field communication (NFC) protocol, Bluetooth Low Energy (BLE)protocol, vehicle to everything (V2X) protocol, dedicated short-range communications (DSRC) protocol, direct-sequence spread spectrum (DSSS) protocol, wireless fidelity (WiFi) protocol or wireless local area network (WLAN) protocol. Types of long-range wireless signals include Bluetooth protocol, ultra-wide band (UWB), general packet radio service (GPRS), universal mobile telephone system (UMTS), 3G, 4G, 5G or any other types of suitable long-range wireless connectivity or connections. Accordingly, the terms "wirelessly", "wirelessly transmitted", and its variations thereof may be construed to refer to the transmission of or exchange of data packets between different points of a network or systems of networks using electromagnetic wave, without cables. The term "wireless communication" shall refer to the communication or exchange of data packets between different points of a network or systems of networks using wireless signals.

The expression "configured to" used in various embodiments of this invention may be interchangeably used with "suitable for", "having the capacity to", "designed to", "adapted to", "made to", or "capable of" according to a situation, for example. The term "configured to" may not necessarily mean "specifically designed to" in terms of hardware. Instead, the expression "a device configured to" in some situations may mean that the device and another device or part are "capable of" carrying out a function.

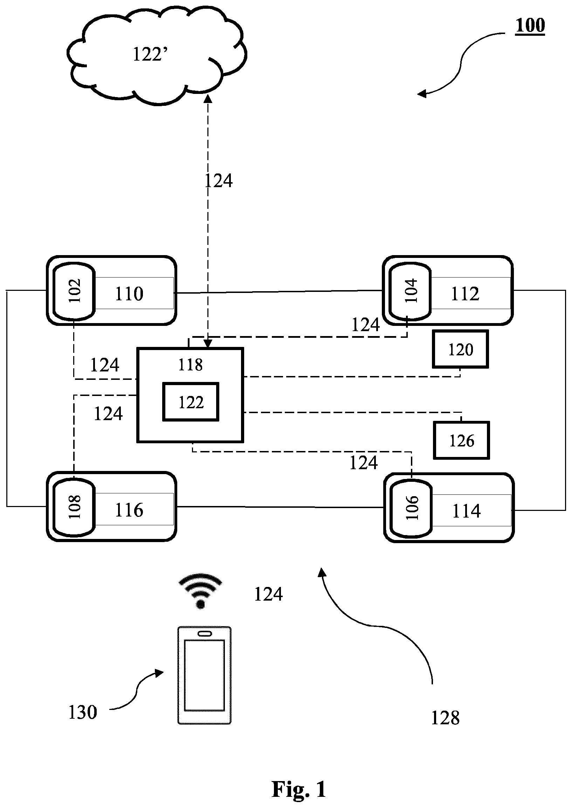

For clarity and a brevity, the embodiments as described below, with reference to Fig. 1, are expressed as a first, second, third and fourth embodiment. It shall be understood that the expression may be used to distinguish one embodiment from another and are not an indication of order of importance.

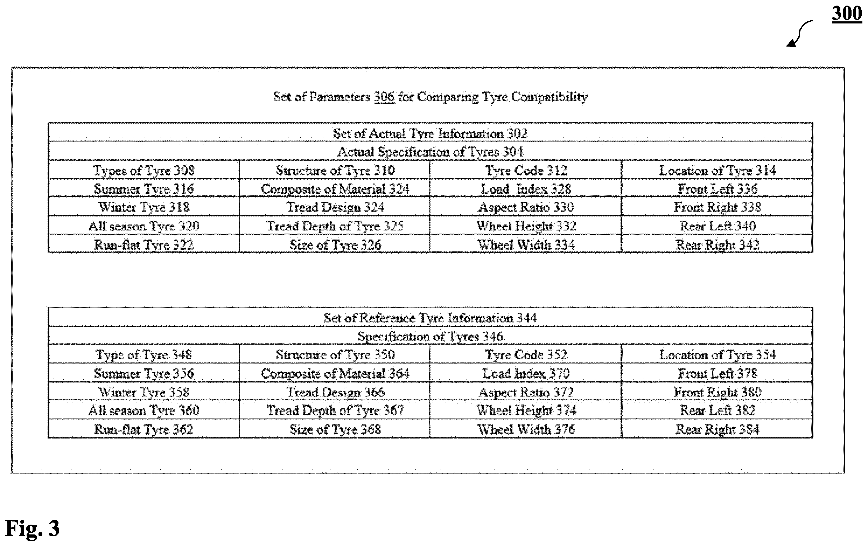

With reference to Fig. 1 which illustrates an exemplary embodiment of a system 100 implemented on a vehicle, a transponder 102 is coupled to a tyre 110, for transmitting a set of actual tyre information 302 (as shown in Fig. 3) in relation to the tyre 110 to an electronic control unit 118. This setup may be replicated on each of the tyres for a vehicle, for example, a passenger vehicle having four tyres, i.e. coupling a second transponder 104 to a second tyre 112, a third transponder 106 to a third tyre 114, and a fourth transponder 108 to a fourth tyre 116. It shall be understood the same setup may be reproduced on other types of vehicles with less or more tyres, for example two-wheelers such as motorcycles, three-wheelers such as all-terrain vehicles (ATV), ten-wheelers trailers, etc.

In a first preferred embodiment, each of transponders 102, 104, 106 and 108 transmits a wireless signal 124 carrying information of the tyre to the electronic control unit 118. The transponders 102, 104, 106 and 108 provide information on a type of tyre, a structure of the tyre, and a tyre code. In other embodiments, the transponders 102, 104, 106 and 108 may have the various information of the tyre 110, 112, 114 or 116, such as the characteristics of the tyre, stored therein and such information is wirelessly transmitted to the electronic control unit 118. The wireless signal 124 may be in the form of data packets, containing a set of actual tyre information 302, may be extracted subsequently. This wireless signal 124 is sent to the electronic control unit 118. The electronic control unit 118 may include a receiver (not shown) for receiving the wireless signal 124 from the transponders 102, 104, 106 and 108 and extracting the information of the tyre 110, 112, 114 or 116 respectively, which is termed herein as the "actual tyre information". Alternatively, the receiver may be a standalone device on board the vehicle 128, which receives the wireless signal 124 from the transponder 102, 104, 106 or 108. The electronic control unit 118 may perform the function of the receiver.

The electronic control unit 118 is configured to send a message to grant permission to start an engine system 120 upon satisfying a set of parameters 306 based on a comparison of the set of actual information of the tyre 110, 112, 114 or 116 against a set of reference tyre information 344 (Fig. 3 referred) compatible with the vehicle 128. Once the set of parameters 306 (Fig. 3 referred) for verifying tyre compatibility is determined to fall within an acceptable range of a corresponding piece of reference tyre information, the electronic control unit 118 sends the message to grant permission to start the engine 120. The message from the electronic control unit 118 may be relayed to the engine system 120 wirelessly or through a vehicle bus such as a Controller Area Network (CAN), Local Interconnect Network (LIN), or FlexRay or any other wired or wireless method. In certain embodiments, the message from the electronic control unit 118 may be relayed to the engine system 120, and a command for starting of engine system 120 may be controlled by a user interface onboard vehicle, for example an engine start-stop button or switch (not shown). Other embodiments may include a voice command, a biometric input or an interface on a display to command starting the engine system 120 if the set of parameters 306 is satisfied.

In accordance with the invention, the electronic control unit 118 is wirelessly connected to an external server 122'.

This may be achieved through transmission of signals via an antenna of the vehicle 128. Therefore, upon receiving the wireless signal 124, the electronic control unit 118 may extract the actual tyre information 302 from the transponders 102, 104, 106 and 108, the set of actual tyre information 302 is wirelessly transmitted to the external server 122' in the form of data packets via the antenna of vehicle 128. External server 122'. The external server 122' may then receive the set of actual tyre information 302 and execute the comparison of the set of actual information of tyres 302, in relation to the tyres 110, 112, 114 or 116 against the set of reference tyre information 344 stored in a database in the external server 122', for verifying whether tyres 110, 112, 114 or 116 are compatible with the vehicle 128. The results of the comparison are transmitted back to the electronic control unit 118, which in turn grants permission to start engine system 120 if the set of parameters 306 is satisfied.

In a second preferred embodiment, the set of actual tyre information 302 is wirelessly communicated to the electronic control unit 118. The set of reference tyre information 344 stored in the database of the external server 122' is wirelessly communicated to the electronic control unit 118, which executes the comparison of the set of actual tyre information 302 against the set of tyre information 344 transmitted from the external server 122'. If the set of parameters 306 is satisfied, the electronic control unit 118 grants permission to start the engine system 120.

In a third preferred embodiment, the set of actual tyre information 302 is wirelessly communicated to the external server 122'. The comparison of the set of actual tyre information 302 against the set of reference tyre information 344 stored in the database of external server 122' is executed by the external server 122', which determines that the set of parameters 306 is satisfied. The results of the comparison is wirelessly communicated to the electronic control unit 118, to relay the message to start engine system 120.

In a fourth embodiment, a mobile communication device 130 may be used as an interface between the electronic control unit 118 and the external server 122'. For instance, the set of actual tyre information 302 may be wirelessly transmitted to the mobile communication device 130, which in turn wirelessly route the same information to the external server 122'. Upon executing the comparison of the set of actual tyre information 302 against the set of reference tyre information 344 by the external server 122', the results are wirelessly transmitted to the mobile communication device 130. The results may be displayed on a graphical user interface of the mobile communication device 130. The results may be wirelessly transmitted to the electronic control unit 118 simultaneously, to grant permission to start the engine system 120. In addition, a virtual key may be used as a user's input to start the engine 120, in replacement of the start-stop engine button as described above.

Since the mobile communication device 130 acts as an intermediary device between the electronic control unit 118 and the external server 122', it shall be understood the first, second, third and fourth embodiments as described above may be modified to include the mobile communication device 130, without deviating from the scope and spirit of the inventive concept of this invention.

To satisfy the set of parameters 306 to trigger the sending of message from the electronic control unit 118 to start the engine system 120, the results of the comparison shall ideally indicate that each piece of actual tyre information falls within an acceptable range of the corresponding piece of reference tyre information. If the comparison is done in the external server 122', the results of the comparison is wirelessly transmitted back to the electronic control unit 118 and upon deciding to grant permission to start the engine system 120, the electronic control unit 118 sends or relays the message to grant permission to start the engine system 120. Various modification to how the electronic control unit 118 or the external server 122' may perform the execution of the decision to start the engine system 120 are as explained in the first, second, third and fourth embodiments as described above. If the results of the comparison indicate that the set of actual information 202 falls outside of the acceptable range, the electronic control unit 118 issues an alert notification 212 in the form of a visual or audio message to the operator. The visual message may be displayed on a display unit, a dashboard or any secondary display devices onboard vehicle 128. Other embodiments may include displaying the visual message on the mobile communication device 130. Alternatively, the audio message may be broadcasted by the system 100 via an audio output, for example an audio system (not shown) on the vehicle 128.

In certain embodiments, the result of the set of parameters 306 defined by the comparison of the actual tyre information 302 against the set of reference tyre information 344 may be logged and stored in the database 112 of the electronic control unit 118, or the external server 112'. When necessary, the history of comparison results may be recalled from the database 122 or external server 122' and displayed on the display unit or any secondary display devices on the vehicle, such that the user or third party servicing the vehicle may verify and check against the comparison results. Alternatively, if an intermediary device such as a mobile communication device 130 is implemented as described in Fig. 1 above, the information may be displayed on the mobile communication 130.

In yet an alternative embodiment, the alert notification 212 is sent to a third party, such as an insurance provider, a vehicle manufacturer, a tyre manufacturer, a vehicle repair workshop, a fleet operation service provider or other suitable parties. The alert notification 212 may include the actual tyre information 302, the tyre information that fell outside of the acceptable range, and/or the tyre information that fell within the acceptable range. Such alerts and information may be useful to the vehicle manufacturer or vehicle repair workshop for, e.g., vehicle warranty purposes and maintenance purposes. Insurance providers may find such alerts and information useful to determine insurance coverage, premiums, tyre usage history, etc. Another suitable third party includes vehicle resellers who may use such information to determine vehicle resale value.

The above exemplary embodiments achieves the objective of verifying tyre compatibility, thus mitigating the risk of compromising safety of driver due to misuse use of incompatible tyres.

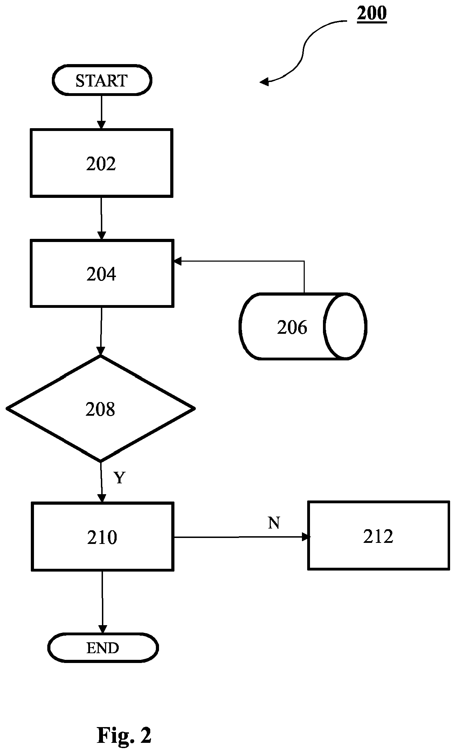

Fig. 2 shows a flowchart 200 illustrating the steps for comparison of the set of actual tyre information 302 against the set of reference tyre information 344. The step 202 involves a wireless transmission of tyre information from each of the tyres 110, 112, 114 or 116 from the transponders 102, 104, 106, 108 to the receiver, which extracts the set of actual tyre information 302. This set of actual tyre information 302 may contain information relating to an actual specification of a tyre 110,112,114 or 116 at a location relative to the vehicle 128. This process step is to ensure or verify that the compatible tyre is located at the correct location relative to the vehicle. For example, heavy load vehicles such as tractors, trucks and other specialised vehicles for transportation of heavy loads typically requires different types of tyre specification at the front and rear of the tractor, and also within the same axle there can be different outer and inner tyres that need to be monitored. Essentially, this step assists to verify that compatible tyres are at the correct or recommended location, to ensure better performance of vehicle, as well as safety of driver.

At the step 204, a comparison of the set of actual information of the tyre 110, 112, 114 or 116 against a set of reference tyre information 344 compatible with the vehicle 128 is executed by the electronic control unit 118. The step 206 refers to the process of obtaining a set of reference tyre information 344 from a database 122, 122'. The set of reference tyre information 344 compatible with the vehicle 128 may be stored in a database of the external server 122', or alternatively, the database 122 is a microprocessor within the electronic control unit 118, all of which are configured for storing and extracting the set of reference tyre information 344, to perform the comparison of each piece of corresponding reference information to the set of actual tyre information 302, to determine whether the set of parameters 306 is satisfied . The reference tyre information 344 may be a catalogue of available tyres suitable for the vehicle, along with the associated information and specifications of each suitable tyre.

The step 208 verifies if each tyre 110, 112, 114 or 116 is allowed at their location relative to the vehicle. The results of the comparison may fall within an acceptable range of each of the corresponding reference information. This allows the electronic control unit 118 to grant permission at step 210, to send or relay a message to start engine system 120 via a vehicle bus if the comparison indicates that the actual tyres are located at a correct or appropriate location relative to the vehicle and compatible tyres with appropriate specifications are used relative to the vehicle.

If the comparison result indicates that the specification does not fall within the acceptable range, the electronic control unit 118 may issue an alert notification 126 at the step 212.

In an exemplary embodiment, the comparison of tyre information is based upon an aspect ratio of the tyre. The aspect ratio of a tyre is defined by a ratio of the cross-section of the tyre to its width in percentage. The set of reference tyre information 344 indicates that the aspect ratio of a compatible tyre is 65% and the actual tyre information 302 indicates that the aspect ratio is 60%, the set of parameters 306 falls within the range and is therefore satisfied.

With reference to Fig. 3 which shows a tyre compatibility matrix 300, the set of reference tyre information 344 comprises of information related to a specification of tyres 346 compatible with the vehicle 128. The information may be categorised into categories, for example an information relating to a type of tyre 348, a structure of a tyre 350, a tyre code 352, and a location of the tyre 354 relative to the vehicle 128. Hereinafter, the term "a location of the tyre" shall be construed to mean the location of the tyre 110, 112, 114 or 116 is relative to the position of the vehicle 128.

Within each category are specific pieces of reference tyre information or parameters. In an exemplary embodiment, under the category "types of tyre 308", possible parameters such as summer tyre 356, winter tyre 358, all season tyre 360 and run-flat tyre 362 may be included as the reference tyre information. Under the category "structure of tyre 350", possible parameters include composite of material 364, tread design 366, tread depth 367 and size of tyre 368. Possible tyre information or parameters to include in the set of reference tyre information 344 under tyre code 352 includes load index 370, aspect ratio 372, wheel height 374 and wheel width 376. As for location of tyre 354, suitable parameters include front left 378, front right 380, rear left 382 and rear right 384, for a passenger vehicle. It shall be understood that the parameters under location of tyre 354 may be expanded, according to the construction and design of the vehicle 128.

Each piece of information contained in the set of actual tyre information 302 is compared against each corresponding piece of reference tyre information contained in the set of reference tyre information 344. Each piece of information contained in the set of actual tyre information 302 shall correspond to each piece of information contained in the set of reference tyre information 344, as shown in Fig. 3.

By way of example, the set of parameters 306 is satisfied by comparing the set of actual information of tyre 302 extracted from tyres 110, 112, 114 or 116 against the set of reference information of tyre 344. Using type of tyre as an example, the category "type of tyre 348" in the reference set 344 is extracted from a database 122 or non-transitory computer-readable medium of the electronic control unit 118 and used to compare against information related to the type of tyre 308 extracted from tyres 110, 112, 114 or 116. Presuming that the category "type of tyre 348" in reference set 344 lists summer tyre 356, all season tyre 360 and run-flat tyre 362 as suitable tyres for use with the vehicle 128, and the actual type of tyre extracted from the wireless signal 124 indicates the tyre 110, 112, 114 or 116 is a summer tyre 316, this parameter is therefore satisfied. If all other information contained in the set of parameters 306 are also satisfied, the tyre is verified to be compatible with vehicle 128 and the electronic control unit 118 relays the message to grant permission to start the engine system 120. On the other hand, if the results of the comparison fall outside of the acceptable range, for example, the set of actual tyre information 302 indicates that the tyre in use is a winter tyre 318 during summer time, this information is not satisfied and the electronic control unit 118 issues an alert notification 126, as described above.

Nonetheless, it shall be understood that certain types of tyre information may be defined in ranges and certain types of tyre information must be fixed or have a discrete value. Tyre information such as wheel width and wheel height may have an acceptable minimum to maximum range while still supporting the performance of a vehicle satisfactorily. In such scenario, the set of parameters 306 may be satisfied and the electronic control unit 118 or the external server 122' may relay the message to start engine system 120. Other types of tyre information that have discrete values may be for instance, the use of a combination of different types of tyres suitable for different weather, which may be compromised if the combination of different types of tyres allows sufficient grip for the vehicle to travel under such weather conditions safely. This may be a scenario where the vehicle 128 is a front wheel drive and has a combination of winter tyres at front left 336, front right 338 but all-season tyres at the rear left 340 and rear right 342. Nonetheless, it shall be understood by person skilled in the art, vehicle performance and safety indicators may also be defined by other characteristics of the tyre depending on type of vehicles. For example if the tyre is flat treaded for road surfacing transport, the sufficiency of grip of a tyre shall not be an issue.

In other scenarios, such as heavy load vehicles i.e. tractors/trucks and other specialised transportation Vehicles as described above, the tyres at front left 336 and front right 338 may require different types of different tread designs or aspect ratio or load rating, from tyres at rear left 340 and rear right 384 to allow better vehicle performance, grip, or safety of driver when in operation. In certain embodiments, the tread depth 367 is used as a piece of tyre information to verify a requisite number of miles has been travelled by vehicle 128. The electronic control unit 118 or the external server 122' may issue an alert notification in the form of a visual message as an early warning informing a change of tyres is required. The tread depth may

For certain parameters such as a tread depth of tyre 367, the tyre compatibility matrix 300 may further include sub-categories within the tread depth reference 366 to define a minimum to maximum depth of the tread allowable or acceptable for driving. The same concept may be applied to size of tyre 326, where a minimum and maximum range of width of tyres recorded in 368 defines the size of tyres acceptable for use.

The acceptable range of information may be cross-checked with location of the tyre 314, which indicates whether tyre is placed at the front left 336, front right 338, rear left 340 or rear right 342. The acceptable range of information may further be adjusted depending on the location of the tyre 314, particularly for pieces of tyre information that may be affected by tyre location. For example, the reference load index 370 of the front tyres of a front wheel drive vehicle may be higher with a narrower acceptable range as compared to that of the rear tyres.

Certain information within the set may be more vital than others. For example, if actual tread depth 325 does not meet the minimum specified in reference tread depth 327, the conditions may not be specified even if the type of tyre, the composite of material 324, the aspect ratio 330, etc may meet the standards. A higher weightage may be given to such vital information when computing whether the set of parameters is satisfied.

Different tyre information may be given different weightage. Calculation of whether the set of parameters is satisfied is dependent on such weightage. For example, in scenarios where some higher-weighted tyre information meets their corresponding standard, while other lower-weighted tyre information fails to meet the corresponding standard, the set of parameters may still be satisfied. Higher-weighted tyre information may include type of tyre, tread depth of tyre and load index or other information.

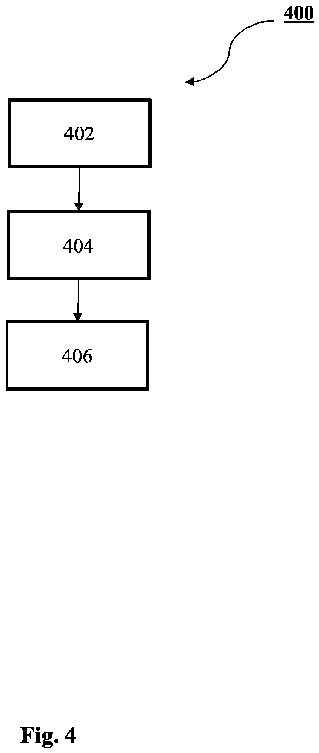

Fig. 4 shows a flowchart indicating a method for verifying compatibility of a tyre with a vehicle equipped with the system in accordance to a preferred embodiment of this invention. The step 402 involves receiving, by an electronic control unit 118, a set of actual tyre information transmitted from a tyre. In the next step 404, the method involves executing a comparison of the set of actual tyre information against a set of reference tyre information compatible with a vehicle. Finally, in step 406, the method involves sending, by the electronic control unit 118, a message granting permission to start an engine system upon satisfying a set of parameters based on the comparison made in step 404.

The detailed description above serves the purpose of explaining the principles of the present invention and its practical application, to enable others skilled in the art to understand this invention. Modifications will be apparent to practitioners skilled in relevant art within the scope of the appended claims.

## Claims

1. A system (100) for verifying compatibility of a tyre with a vehicle, the system (100) comprising:
a transponder (102, 104, 106, 108) adapted for coupling to a tyre (110, 112, 114, 116), the transponder (102, 104, 106, 108) operable to transmit a wireless signal (124) carrying a set of actual tyre information (302); and
an electronic control unit (118) comprising a receiver for receiving the wireless signal (124) from the transponder (102, 104, 106, 108) and extracting the set of actual tyre information (302),
wherein the electronic control unit (118) is configured to send a message to grant permission to start an engine system (120) upon satisfying a set of parameters based on a comparison of the set of actual tyre information (302) against a set of reference tyre information (344) compatible with the vehicle
**characterized in that**
the electronic control unit (118) is configured to send the set of actual tyre information (302) wirelessly to an external server (122'), and to receive the message to grant permission to start the engine system (120) from the external server (122').

2. The system according to Claim 1, wherein the set of parameters is satisfied when each piece of actual tyre information (302) falls within an acceptable range of a corresponding piece of reference tyre information (344).

3. The system according to Claim 1, wherein the set of parameters is satisfied when an alert notification (126) is issued by the electronic control unit (118) if at least some of actual tyre information (302) falls outside of an acceptable range of the corresponding reference information (344).

4. The system according to any one of the preceding claims, wherein the set of reference tyre information (344) comprises of a specification of a tyre (346) compatible with the vehicle (128).

5. The system according to Claim 4, wherein the specification of the tyre (346) comprises of an information relating to a type of tyre (348) selected from a group consisting of a summer tyre (356), a winter tyre (358), an all-season tyre (360), a run-flat tyre (362) and a combination thereof.

6. The system according to Claim 5, wherein the specification of the tyre (346) comprises of an information relating to a structure of a tyre (350) selected from a group consisting of a composite of material of the tyre (364), a tread design of the tyre (366), a tread depth of the tyre (367), a size of the tyre (368) and a combination thereof.

7. The system according to any one of Claims 5 to 6, wherein the specification of the tyre (346) comprises of an information relating to a tyre code (352) selected from a group consisting of a load index (370), an aspect ratio (372), wheel height (374), a wheel width (376) or a combination thereof.

8. The system according to any one of Claims 5 to 7, wherein the set of reference tyre information (344) comprises a location of the tyre (354) relative to the vehicle (128), the acceptable range being dependent on said location.

9. The system according to any one of Claim 4 to 8, wherein the alert notification (212) issued by the electronic control unit (118) is a visual message, an audio message, an alert notification sent to a third party, or a combination thereof.

10. The system according to Claim 9, wherein the third party comprises of an insurance provider, a vehicle manufacturer, a tyre manufacturer, a vehicle repair workshop, a fleet operation service provider and a combination thereof.

11. The system according to any one of the preceding claims, wherein the electronic control unit (118) is a body control unit of a vehicle (128).

## Patentansprüche

1. System (100) zum Überprüfen der Kompatibilität eines Reifens mit einem Fahrzeug, wobei das System (100) Folgendes aufweist:
einen Transponder (102, 104, 106, 108), der zur Kopplung mit einem Reifen (110, 112, 114, 116) ausgelegt ist, wobei der Transponder (102, 104, 106, 108) betriebsfähig ist, um ein drahtloses Signal (124), das einen Satz tatsächlicher Reifenformationen (302) übermittelt, zu übertragen; und
eine elektronische Steuereinheit (118), die einen Empfänger zum Empfangen des drahtlosen Signals (124) von dem Transponder (102, 104, 106, 108) und zum Extrahieren des Satzes tatsächlicher Reifenformationen (302) aufweist,
wobei die elektronische Steuereinheit (118) dazu ausgebildet ist, eine Nachricht zum Erteilen einer Berechtigung zum Starten eines Motorsystems (120) beim Einhalten eines Satzes von Parametern basierend auf einem Vergleich des Satzes tatsächlicher Reifenformationen (302) mit einem Satz von
Reifenreferenzinformationen (344), die mit dem Fahrzeug kompatibel sind, zu senden,
**dadurch gekennzeichnet, dass**
die elektronische Steuereinheit (118) dazu ausgebildet ist, den Satz tatsächlicher Reifenformationen (302) drahtlos an einen externen Server (122') zu senden und die Nachricht zum Erteilen einer Berechtigung zum Starten des Motorsystems (120) von dem externen Server (122') zu empfangen.

2. System nach Anspruch 1, wobei der Satz von Parametern eingehalten wird, sobald jede der tatsächlichen Reifenformationen (302) in einen zulässigen Bereich einer entsprechenden der Reifenreferenzinformationen (344) fällt.

3. System nach Anspruch 1, wobei der Satz von Parametern eingehalten wird, sobald von der elektronischen Steuereinheit (118) eine Warnmeldung (126) ausgegeben wird, wenn mindestens einige der tatsächlichen Reifenformationen (302) außerhalb eines zulässigen Bereichs der entsprechenden Referenzinformationen (344) liegen.

4. System nach einem der vorhergehenden Ansprüche, wobei der Satz von Reifenreferenzinformationen (344) eine Spezifikation eines Reifens (346), der mit dem Fahrzeug (128) kompatibel ist, aufweist.

5. System nach Anspruch 4, wobei die Spezifikation des Reifens (346) eine Information aufweist, die sich auf einen Reifentyp (348) bezieht, der aus einer Gruppe ausgewählt wird, die aus einem Sommerreifen (356), einem Winterreifen (358), einem Ganzjahresreifen (360), einem Notlaufreifen (362) und einer Kombination davon besteht.

6. System nach Anspruch 5, wobei die Spezifikation des Reifens (346) eine Information aufweist, die sich auf eine Struktur eines Reifens (350) bezieht, die aus einer Gruppe ausgewählt wird, die aus einem Verbundwerkstoff des Reifens (364), einem Laufflächenprofil des Reifens (366), einer Profiltiefe des Reifens (367), einer Größe des Reifens (368) und einer Kombination davon besteht.

7. System nach einem der Ansprüche 5 bis 6, wobei die Spezifikation des Reifens (346) eine Information aufweist, die sich auf eine Reifenkennzeichnung (352) bezieht, die aus einer Gruppe ausgewählt wird, die aus einem Tragfähigkeitsindex (370), einem Querschnittsverhältnis (372), einer Radhöhe (374), einer Radbreite (376) oder einer Kombination davon besteht.

8. System nach einem der Ansprüche 5 bis 7, wobei der Satz von Reifenreferenzinformationen (344) eine Stelle des Reifens (354) relativ zu dem Fahrzeug (128) aufweist, wobei der zulässige Bereich von der Stelle abhängig ist.

9. System nach einem der Ansprüche 4 bis 8, wobei die von der elektronischen Steuereinheit (118) ausgegebene Warnmeldung (212) eine visuelle Nachricht, eine Audionachricht, eine Warnmeldung, die an einen Dritten gesendet wird, oder eine Kombination davon ist.

10. System nach Anspruch 9, wobei der Dritte einen Versicherer, einen Fahrzeughersteller, einen Reifenhersteller, eine Fahrzeugreparaturwerkstatt, einen Flottenbetreiber und eine Kombination davon umfasst.

11. System nach einem der vorhergehenden Ansprüche, wobei die elektronische Steuereinheit (118) eine Karosseriesteuereinheit eines Fahrzeugs (128) ist.

## Revendications

1. Système (100) destiné à vérifier la compatibilité d'un pneu avec un véhicule, le système (100) comprenant :
un transpondeur (102, 104, 106, 108) adapté pour être couplé à un pneu (110, 112, 114, 116), le transpondeur (102, 104, 106, 108) étant opérationnel pour transmettre un signal sans fil (124) portant un ensemble d'informations de pneu réel (302) ; et
une unité de commande électronique (118) comprenant un récepteur destiné à recevoir le signal sans fil (124) provenant du transpondeur (102, 104, 106, 108) et à extraire l'ensemble d'informations de pneu réel (302),
dans lequel l'unité de commande électronique (118) est configurée pour envoyer un message pour accorder l'autorisation de démarrer un système de moteur (120) lorsqu'un ensemble de paramètres est satisfait sur la base d'une comparaison de l'ensemble d'informations de pneu réel (302) et d'un ensemble d'informations de pneu de référence (344) compatible avec le véhicule,
**caractérisé en ce que**
l'unité de commande électronique (118) est configurée pour envoyer l'ensemble d'informations de pneu réel (302) sans fil à un serveur externe (122'), et pour recevoir le message pour accorder l'autorisation de démarrer le système de moteur (120) provenant du serveur externe (122').

2. Système selon la revendication 1, dans lequel l'ensemble de paramètres est satisfait lorsque chaque élément des informations de pneu réel (302) se trouve dans une plage acceptable d'un élément des informations de pneu de référence (344) correspondant.

3. Système selon la revendication 1, dans lequel l'ensemble de paramètres est satisfait lorsqu'une notification d'alerte (126) est émise par l'unité de commande électronique (118) si au moins une partie des informations de pneu réel (302) se trouve en dehors d'une plage acceptable des informations de référence (344) correspondantes.

4. Système selon l'une quelconque des revendications précédentes, dans lequel l'ensemble d'informations de pneu de référence (344) comprend une spécification d'un pneu (346) compatible avec le véhicule (128).

5. Système selon la revendication 4, dans lequel la spécification du pneu (346) comprend une information relative à un type de pneu (348) choisie parmi un groupe constitué d'un pneu d'été (356), d'un pneu d'hiver (358), d'un pneu toutes saisons (360), d'un pneu à affaissement limité (362) et d'une combinaison de ceux-ci.

6. Système selon la revendication 5, dans lequel la spécification du pneu (346) comprend une information relative à une structure d'un pneu (350) choisie parmi un groupe constitué d'un matériau composite d'un matériau du pneu (364), d'une conception de bande de roulement du pneu (366), d'une profondeur de bande de roulement du pneu (367), d'une taille du pneu (368) et d'une combinaison de ceux-ci.

7. Système selon l'une quelconque des revendications 5 à 6, dans lequel la spécification du pneu (346) comprend une information relative à un code de pneu (352) choisie parmi un groupe constitué d'un indice de charge (370), d'un rapport d'aspect (372), d'une hauteur de roue (374), d'une largeur de roue (376) ou d'une combinaison de ceux-ci.

8. Système selon l'une quelconque des revendications 5 à 7, dans lequel l'ensemble d'informations de pneu de référence (344) comprend un emplacement du pneu (354) par rapport au véhicule (128), la plage acceptable étant dépendante dudit emplacement.

9. Système selon l'une quelconque des revendications 4 à 8, dans lequel la notification d'alerte (212) émise par l'unité de commande électronique (118) est un message visuel, un message audio, une notification d'alerte envoyée à un tiers, ou une combinaison de ceux-ci.

10. Système selon la revendication 9, dans lequel le tiers comprend un fournisseur d'assurances, un fabricant de véhicules, un fabricant de pneus, un atelier de réparation de véhicules, un fournisseur de services d'opération de parc et une combinaison de ceux-ci.

11. Système selon l'une quelconque des revendications précédentes, dans lequel l'unité de commande électronique (118) est une unité de commande de carrosserie d'un véhicule (128).
